# EUROPEAN PATENT SPECIFICATION

(11) **EP 2 388 639 B1**
(45) Date of publication and mention of the grant of the patent: **23.08.2017**
(21) Application number: 11003786.8
(22) Date of filing: 09.05.2011
(51) Int. Cl.: G02B 6/27, G02B 6/42, G02B 27/48

(54) **Laser light source device**
Laserlichtquellenvorrichtung
Dispositif de source lumineuse laser

(30) Priority: 17.05.2010 JP 2010113440
(43) Date of publication of application: 23.11.2011
(73) Proprietor: Mitsubishi Electric Corporation, Chiyoda-ku Tokyo 100-8310 (JP)
(72) Inventor: Yanagisawa, Takayuki, Tokyo 100-8310 (JP); Inoue, Yoko, Tokyo 100-8310 (JP); Sawanaka, Tomohiko, Tokyo 100-8310 (JP)
(74) Representative: Pfenning, Meinig & Partner mbB

(56) References cited:
- EP-A1- 0 312 652
- EP-A1- 1 258 954
- JP-A- 2008 224 889
- US-A- 5 533 152
- US-A1- 2007 014 008
- US-A1- 2008 180 934

## Description

### BACKGROUND OF THE INVENTION

### 1. Field of the Invention

The present invention generally relates to a laser light source device.

### 2. Description of the Related Art

In image display devices such as a projector and a projection television, a high output light source is required along with an increase of their screen size. To meet this demand, there has been developed a laser light source device (a laser light source for illumination) that uses a laser capable of collecting beams within a narrow range as a light source.

When laser beams are used for a light source, speckles and scintillations are generated on a screen of the image display device because the laser beams have strong coherence. Particularly, laser beams of a high degree of linear polarization have stronger coherence, and therefore it becomes difficult to erase the speckles and scintillations.

As a method for achieving high output of laser beams, there has been a method using a laser array (array laser) that has plural light emitting points arranged and integrated in an array shape. Generally, in an array laser using a semiconductor laser or a solid state laser medium, the polarizations of emitted laser beams are directed to the same direction, and thus speckles and scintillations are easily generated. Therefore, according to a method described in "Kohgaku" (Optics) (by Hiroki KIKUCHI, the Japan Society of Applied Physics, published in 2006, Vol. 35, p. 301), laser beams are divided into two orthogonal components, and an optical-path difference of the coherence length is set to the laser beams after dividing, and thereafter the divided laser beams are combined again, thereby decreasing its coherence.

However, according to the conventional technique described above, there is a problem that an optical system needs to be large in order to have a sufficient optical-path difference. When an optical path-difference is insufficient and when laser beams are incident to an optical fiber or an optical component, a polarization state changes and a sufficient depolarization degree cannot be obtained because of birefringence of the optical fiber, birefringence of the optical component, and a reflection characteristic. As a result, there is a problem that speckles and scintillations increase.

The present invention has been achieved in view of the above problems, and an object of the present invention is to provide a laser light source device capable of emitting laser beams at high output and capable of reducing speckles, scintillations, and polarization distributions within a screen in a simple configuration.
US 2008/0180934A discloses a laser light source unit is provided, including a light source, a wavefront dividing unit, a wavefront synthesizing unit, and a polarization conversion unit. The polarization conversion unit is provided with at least a plurality of wave plates each having the direction of optical axis different each other.

### SUMMARY OF THE INVENTION

It is an object of the present invention to at least partially solve the problems in the conventional technology.

According to an aspect of the present invention, there is provided a laser light source device as defined in the presently independent claim. The laser light source device includes: a laser light source that emits laser beams from a plurality of light emitting points; and a polarization rotating unit that is arranged on a light axis of a laser beam output from one or a plurality of light emitting points of the laser light source, wherein the polarization rotating unit rotates a polarization of the laser beam output from one or a plurality of light emitting points by about 90°.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 depicts a configuration of a laser light source device according to a first embodiment of the present invention;
FIG. 2 is a front view of the laser light source device when an array laser light source is viewed from an emission direction of laser beams through a half-wavelength plate; and
FIG. 3 depicts a configuration of a laser light source device according to a second embodiment of the present invention.

### DETAILED DESCRIPTION OF THE PREFERRED EMBODIMENTS

Exemplary embodiments of a laser light source device according to the present invention will be explained below in detail with reference to the accompanying drawings. The present invention is not limited to the embodiments.

### <First Embodiment>

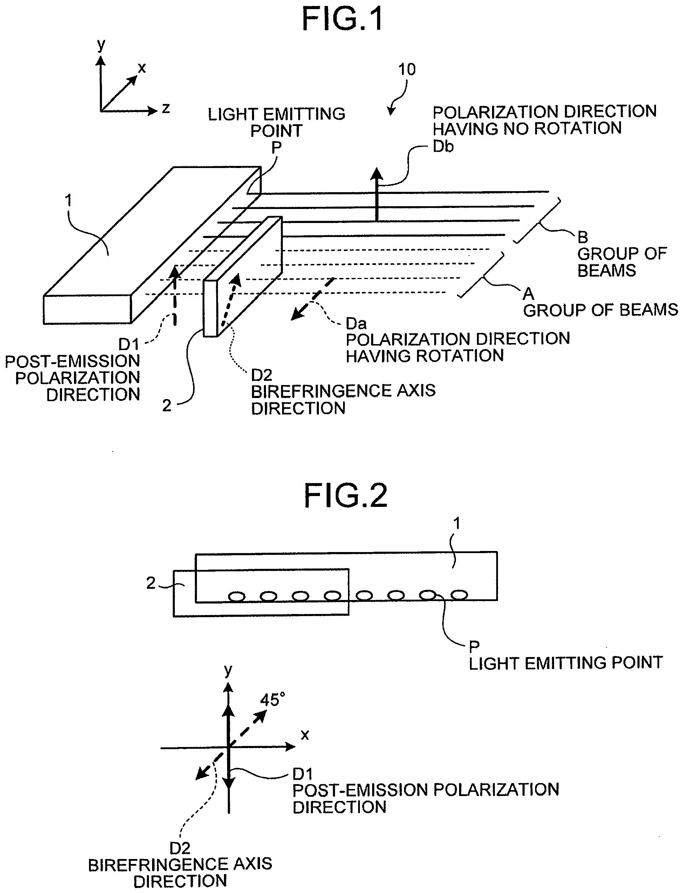

FIG. 1 depicts a configuration of a laser light source device according to a first embodiment of the present invention. FIG. 2 is a front view of the laser light source device when an array laser light source is viewed from an emission direction of laser beams through a half-wavelength plate. FIG. 2 depicts a polarization direction of an array laser light source 1, an arrangement position of a half-wavelength plate 2, and an axis direction of a birefringence axis, of a laser light source device 10, respectively shown in FIG. 1.

The laser light source device 10 is a light source for illumination that illuminates a screen used for image display. The laser light source device 10 is applied to a light source of an image display device (a video display device) such as a projector and a projection television, for example, and is used for a light source of a high output laser device and a wavelength-conversion laser device.

The laser light source device 10 is configured to include the array laser light source 1 having plural light emitting points P arranged and integrated in an array shape, and the half-wavelength plate (polarization rotating unit) 2 that rotates the polarization of laser beams by 90°. The array state laser light source 1 uses a semiconductor laser or a solid laser medium, and has plural light emitting points P within a plane that is an emission side of laser beams (laser-beam emission surface).

The array laser light source 1 has substantially a tabular shape, for example, and the light emitting points P are arranged substantially linearly (arranged in an x direction) on one tabular side surface (on an xy plane). The array laser light source 1 emits laser beams from the light emitting points P of the laser-beam emission surface such that the laser beams is perpendicular to the laser-beam emission surface (a z-axis direction).

The laser beams, which are emitted from the light emitting points P and of which the z-axis direction is a light axis direction, have a polarization axis in a direction (a y-axis direction) perpendicular to a principal surface of the array laser light source 1. In FIGS. 1 and 2, a polarization direction of the laser beams is shown as a post-emission polarization direction D1.

The half-wavelength plate 2 converts linear polarizations of laser beams from the light emitting points P into orthogonal linear polarizations and sets a phase difference of the linear polarizations at 180°. The half-wavelength plate 2 has substantially a tabular shape, and is arranged in front of the array laser light source 1 (on a light axis of the laser beams) such that a principal surface of the half-wavelength plate 2 becomes perpendicular to the light axis of the laser beams emitted from the array laser light source 1. In other words, the half-wavelength plate 2 is arranged such that a principal surface becomes in parallel with the xy plane and also becomes in parallel with the laser-beam emission surface of the array laser light source 1.

The half-wavelength plate 2 is arranged such that laser beams from about a half of the entirety of the light emitting points P are irradiated. With this arrangement, the laser beams from about a half of the entire light emitting points P are propagated via the half-wavelength plate 2, and the laser beams from about a remaining half of the light emitting points P are propagated without passing through the half-wavelength plate 2.

For example, the half-wavelength plate 2 is arranged to emit laser beams from the light emitting points P that are arranged at the left half of the laser-beam emission surface of the array laser light source 1. In other words, the half-wavelength plate 2 is arranged such that laser beams of a half of the total number of the laser beams emitted from the array laser light source 1 are irradiated to the half-wavelength plate 2.

The half-wavelength plate 2 is arranged such that a birefringence axis direction D2 as an axis direction of a birefringence axis be inclined at an angle of 45 degrees relative to a polarization axis direction of the array laser light source 1. A group of beams A shown in FIG. 1 is laser beams that are transmitted through the half-wavelength plate 2 and polarizations of which are rotated by 90°, and a group of beams B is laser beams emitted without being transmitted through the half-wavelength plate 2. Therefore, the group of beams A is a linear polarization in a horizontal direction (an x-axis direction), and the group of beams B is a linear polarization in a vertical direction (the y-axis direction). In FIG. 1, the polarization direction of the group of beams A is shown as a polarization direction Da having a rotation (with the beams passing through the wavelength plate) and the polarization direction of the group of beams B is shown as a polarization direction Db having no rotation (without the beams passing through the wavelength plate).

An operation of the laser light source device 10 is explained next. Laser beams as linear polarizations in a vertical direction are emitted from the light emitting points P of the array laser light source 1. Laser beams of about a half of the laser beams emitted from the light emitting points P are emitted to the half-wavelength plate 2 as the group of beams A, and laser beams of a remaining half of the laser beams are propagated without being irradiated to the half-wavelength plate 2 as the group of beams B.

A polarization direction of the group of beams A irradiated to the half-wavelength plate 2 is rotated by 90° by the half-wavelength plate 2, and the group of beams A becomes a linear polarization in a horizontal direction. The group of beams B is propagated as a linear polarization in a vertical direction.

Accordingly, polarization directions of laser beams from about halves of the light emitting points P become orthogonal to each other. In other words, a polarization direction of laser beams from about a half of the entire light emitting points P and a polarization direction of laser beams from about a remaining half of the entire light emitting points P are orthogonal to each other. Therefore, in the array laser light source 1 on the whole, a depolarization degree of approximately 100% can be obtained.

Because separate resonators oscillate laser beams at the light emitting points P of the array laser light source 1, coherence of laser beams emitted from the light emitting points P is small. Therefore, a substantially identical change of a polarization state occurs in all laser beams even when the laser beams receive an influence of a phase change due to birefringence and reflection by inputting the laser beams emitted from the light emitting points P to a light propagation element (light propagating unit) such as an optical fiber and to an optical component such as a birefringent material and a reflection mirror. Therefore, a polarization component ratio in a vertical direction and a horizontal direction does not change so much, and the depolarization degree is maintained. For example, when laser beams receive a birefringence effect that a polarization rotates, the same rotation is generated in both a vertical direction and a horizontal direction, and thus the depolarization degree can be maintained. With this configuration, regardless of an intermediate optical system, the laser light source device 10 that can reduce speckles and scintillations can be configured. The groups of beams A and B emitted from the laser light source device 10 are transmitted to a screen of an image display device such as a projector and a projection television, and illuminate the screen.

As explained above, laser beams from the array laser light source 1 do not receive an influence due to a characteristic of an optical propagation element and an optical component, and can reduce speckles and scintillations as well as polarization distributions within a screen. Because it suffices that the half-wavelength plate 2 is arranged in the laser light source device 10, laser beams can be output at high output in a simple configuration.

In the first embodiment, although there has been explained a case where a polarization axis direction (the post-emission polarization direction D1) of laser beams emitted from the array laser light source 1 is a vertical direction (y-axis direction), the post-emission polarization direction D1 can be a direction other than the vertical direction. Also in this case, when the light emitting points P have the same polarization characteristic, an effect identical to that of when the post-emission polarization direction D1 is a vertical direction can be achieved regardless of a polarization axis direction and a polarization state.

In the first embodiment, although there has been explained a case that a polarization direction is rotated by 90° by using the half-wavelength plate 2, the polarization direction can be also rotated by 90° by using other components such as a quartz rotator and a Faraday rotator. The quartz rotator is an optical device that converts an incident light beam of a linear polarization into a different light beam of a linear polarization and outputs the converted light beam. The Faraday rotator is an optical device that rotates a polarization surface of an output laser beam with respect to that of an input laser beam using the Faraday effect.

An arrangement position of the half-wavelength plate 2 is not limited to an example shown in FIGS. 1 and 2, and the half-wavelength plate 2 can be arranged at other positions. For example, the half-wavelength plate 2 can be arranged such that laser beams from the light emitting points P arranged at the right half of the laser-beam emission surface of the array laser light source 1 are irradiated to the half-wavelength plate 2. Alternatively, the half-wavelength plate 2 can be arranged such that laser beams from the light emitting points P arranged at the center portion of the laser-beam emission surface of the array laser light source 1 are irradiated to the half-wavelength plate 2. Still alternatively, plural half-wavelength plates 2 are prepared in advance, and the half-wavelength plates 2 can be arranged such that the total number of laser beams irradiated to the half-wavelength plates 2 becomes a half of the total number of beams. For example, two half-wavelength plates 2 are prepared in advance, and the half-wavelength plates 2 can be arranged such that a quarter of the total number of beams is irradiated to one half-wavelength plate 2 and a quarter of the total number of beams is irradiated to the other half-wavelength plate 2.

In the first embodiment, although a polarization direction of about a half of laser beams emitted from the light emitting points P of the array laser light source 1 is rotated, a polarization direction of one or plural (at a maximum, the number of light emitting points - 1) light emitting points P can be also rotated. In this case, the depolarization degree becomes poor, and thus its effect becomes less. However, an effect identical to that of when a polarization direction of about a half of laser beams is rotated can be obtained.

As described above, according to the first embodiment, laser beams from about a half of the entire light emitting points P are irradiated to the half-wavelength plate 2, and a polarization direction of the irradiated laser beams is rotated by 90° by the half-wavelength plate 2. Therefore, laser beams can be output at high output while reducing speckles, scintillations, and polarization distributions within the screen in a simple configuration.

### <Second Embodiment>

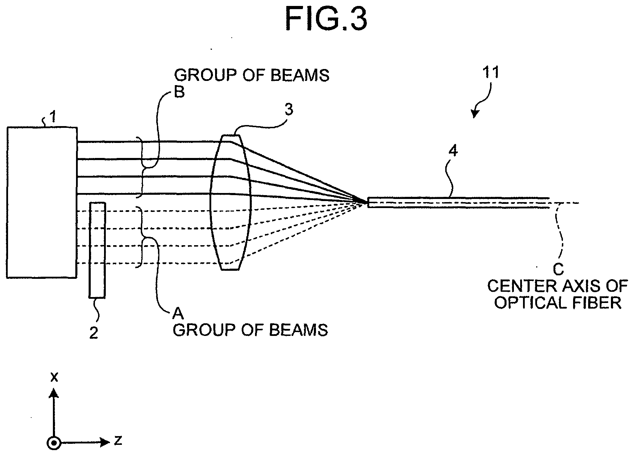

A second embodiment of the present invention is explained next with reference to FIG. 3. In the first embodiment, there has been explained a method for setting the depolarization degree at about 100% as the entire light source. However, linear polarizations are kept in individual laser beams. Therefore, in a case of an optical system configuration in which laser beams from light emitting points are illuminated in isolation, a suppression effect of speckles and scintillations decreases. Accordingly, in the second embodiment, this inconvenience is solved by combining laser beams by a fiber.

FIG. 3 depicts a configuration of a laser light source device according to the second embodiment. FIG. 3 depicts a state that a laser light source device 11 is viewed from a y-axis direction (a plan view). Among respective components shown in FIG. 3, components having functions identical to those in the laser light source device 10 according to the first embodiment and shown in FIGS. 1 and 2, like reference numerals are denoted and redundant explanations thereof will be omitted.

The laser light source device 11 includes the array laser light source 1, the half-wavelength plate 2, a coupling optical system 3 (light collecting unit), and an optical fiber (light propagating unit) 4. The coupling optical system 3 includes one or plural of lenses or, one or plural of collecting lenses. The coupling optical system 3 is arranged at a latter part of an optical path than the half-wavelength plate 2, and combines the group of beams A and the group of beams B. The coupling optical system 3 transmits the combined groups A and B to a beam entrance of the optical fiber 4.

The optical fiber 4 is arranged at a latter side of the coupling optical system 3, and causes laser beams to propagate to a latter side of the laser light source device 11. The optical fiber 4 is arranged such that a light collecting position of the groups of beams A and B collected by the coupling optical system 3 comes to an entrance of the laser beams (on a center axis C of the optical fiber).

An operation of the laser light source device 11 is explained next. Laser beams are emitted from the array laser light source 1. A polarization direction of the group of beams A after passing through the half-wavelength plate 2 is rotated by 90°, and then the coupling optical system 3 combines the group of beams A with the group of beams B at the beam entrance of the optical fiber 4. The laser beams combined by the optical fiber 4 are propagated while spreading in rotation symmetry based on axial symmetry of the optical fiber 4.

Because the group of beams A is at a one side (a half of laser beams) of the array laser light source 1, the group of beams A is input to the optical fiber 4 from a one-side direction of the axis of the optical fiber 4. However, when the group of beams A is emitted from the optical fiber 4, the group of beams A is emitted by having an angle distribution that is substantially rotationally symmetrical with a light axis of the optical fiber 4. On the other hand, the group of beams B is input in axial symmetry with the group of beams A relative to the light axis of the optical fiber 4. However, when the group of beams B is emitted from the optical fiber 4 in a similar manner to that of the group of beams A, the group of beams B is emitted by having an angle distribution that is substantially rotationally symmetrical with a light axis of the optical fiber 4 in a similar manner to that of the group of beams A.

With this configuration, the group of beams A is emitted from the optical fiber 4 in superimposition with the group of beams B. Because the groups of beams A and B have mutually orthogonal polarization characteristics, even when a polarization state of laser beams input to the optical fiber 4 changes by receiving a birefringence effect, the depolarization degree held when the laser beams are input can be kept. Therefore, the depolarization degree can be spatially averaged within a screen, and the laser light source device 11 having small distributions of the depolarization degree can be obtained.

Further, because distributions of depolarization degrees are small, a generation state of speckles and scintillations can be averaged regardless of a position of a display or a screen. In addition, because distributions of depolarization degrees are small, occurrence of irregularities in brightness of a screen becomes small in 3D display, in which an image is displayed three-dimensionally by separating beams that enter left and right eyes by using polarizations.

Although a case in which the optical fiber 4 is axisymmetric has been explained above, the optical fiber 4 can be also configured to have a rectangular or a D-shape cross section. With this configuration, when an angle of laser beams that are input in one direction is reflected on a side surface of the optical fiber 4, an angle (a propagation angle of laser beams) changes greatly. Therefore, distributions of laser beams within the optical fiber 4 easily become uniform, and the length of the optical fiber 4 can be shortened.

In the second embodiment, although laser beams are combined within the optical fiber 4 by using the coupling optical system 3, a rectangular or circular integrator rod (a hollow rod or a glass rod having an inner surface in a mirror shape) can be used instead of the optical fiber 4.

As described above, according to the second embodiment, the groups of beams A and B are input to the optical fiber 4 by using the coupling optical system 3. Therefore, the groups of beams A and B are propagated while spreading in rotation symmetry based on axial symmetry of the optical fiber 4. Accordingly, distributions of depolarization degrees can be reduced spatially.

According to the present invention, laser beams can be emitted at high output, and speckles, scintillations, and polarization distributions within a screen can be reduced in a simple configuration.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A laser light source device (10; 11) comprising:
a laser light source (1) that emits linearly polarized laser beams from a plurality of light emitting points (P), wherein the plurality of emitting points are within a plane (xy plane) that is an emission side of laser beams, and the laser beams are perpendicular to the emission side of laser beams; and
a polarization rotating unit (2) that is arranged on a light axis of a laser beam output from a plurality of light emitting points (P) of the laser light source (1), a light collection unit (3) consisting of one or a plurality of collecting lenses that collects a first half of the entire laser beam (A) transmitted from the laser light source (1) via the polarization rotating unit (2) and a second half of the entire laser beam (B) transmitted from the laser light source (1) without passing through the polarization rotating unit (2); and
a light propagating unit (4) which is an optical fibre or an integrator rod and to which the laser beams collected by the light collecting unit (3) are input and which causes the laser beams to propagate therethrough, wherein
the polarization rotating unit (2) rotates a polarization of the laser beam output from a plurality of light emitting points (P) by 90°,
the light propagating unit (4) is arranged such that a light collecting position of the first half laser beam (A) and the second half laser beam (B) collected by the light collecting unit (3) is an entrance of the light propagating unit (4),the first half laser beam (A) is input to the light propagating unit (4) from a one-side direction of an axis (C) of the light propagating unit (4) and the second half laser beam (B) is input in axial symmetry with the first laser beam (A) relative to the axis (C) of the light propagating unit (4),
the first half laser beam (A) is emitted from the light propagating unit (4) by having an angle distribution that is rotationally symmetrical with the axis (C) of the light propagating unit (4) and the second half laser beam (B) is emitted from the light propagating unit (4) by having an angle distribution that is rotationally symmetrical with the axis (C) of the light propagating unit (4), and
the first half laser beam (A) is emitted from the light propagating unit (4) in superimposition with the second half laser beam (B).

2. The laser source device (10, 11) according to claim 1, wherein the light propagating unit (4) is configured to have a rectangular or a D-shape cross section.

3. The laser light source device (10; 11) according to any of the preceding claims, wherein the polarization rotating unit (2) rotates a polarization of a laser beam output from about a half of the light emitting points (P).

4. The laser light source device (10; 11) according to any one of claims 1 to 3, wherein the laser light source (1) is a semiconductor laser in which the light emitting points (P) are arranged in an array shape on an emission surface of the laser beams.

5. The laser light source device (10; 11) according to any one of claims 1 to 3, wherein the laser light source (1) is a solid state laser having a plurality of light emitting points (P).

6. The laser light source device (10; 11) according to any one of claims 1 to 5, wherein the polarization rotating unit (2) is a half-wavelength plate.

7. The laser light source device (10; 11) according to any one of claims 1 to 6, wherein the polarization rotating unit (2) is a quartz rotator.

8. The laser light source device (10; 11) according to any one of claims 1 to 7, wherein the polarization rotating unit (2) is a Faraday rotator.

9. The laser light source device (10; 11) according to any one of claims 1 to 8, wherein the light propagating unit (4) is an optical fiber.

10. The laser light source device (10; 11) according to any one of claims 1 to 8, wherein the light propagating unit (4) is an integrator rod.

## Patentansprüche

1. Laserlichtquellenvorrichtung (10; 11) enthaltend:
eine Laserlichtquelle (1), die linear polarisierte Laserstrahlen von einer Vielzahl von lichtemittierenden Punkten (P) emittiert, wobei die Vielzahl von emittierenden Punkten innerhalb einer Ebene (xy-Ebene) liegen, die eine Emissionsseite von Laserstrahlen ist, und wobei die Laserstrahlen senkrecht zu der Emissionsseite der Laserstrahlen sind; und
eine Polarisationsdreheinheit (2), die auf einer Lichtachse eines Laserstrahls, der von einer Vielzahl von lichtemittierenden Punkten (P) der Laserlichtquelle (1) ausgegeben wird, angeordnet ist;
einer Lichtsammeleinheit (3), die aus einer oder einer Vielzahl von Sammellinsen besteht, die eine erste Hälfte des gesamten Laserstrahls (A), die von der Laserlichtquelle (1) über die Polarisationsdreheinheit (2) übertragen wird, sammelt und eine zweite Hälfte des gesamten Laserstrahls (B), die von der Laserlichtquelle (1) ohne Durchgang durch die Polarisationsdreheinheit (2) übertragen wird, sammelt; und
eine Lichtpropagationseinheit (4), die eine optische Faser oder ein Integratorstab ist und in die die Laserstrahlen, die durch die Lichtsammeleinheit (3) gesammelt wurden, eingegeben wird und die den Laserstrahl hindurch propagieren lässt,
wobei
die Polarisationsdreheinheit (2) eine Polarisation des Laserstrahls, der von einer Vielzahl von lichtemittierenden Punkten (P) ausgegeben wird, um 90° dreht,
die Lichtpropagationseinheit (4) derart angeordnet ist, dass eine Lichtsammelposition des ersten halben Laserstrahls (A) und des zweiten halben Laserstrahls (B), die durch die Lichtsammeleinheit (3) gesammelt werden, ein Eingang der Lichtpropagationseinheit (4) ist, wobei der erste halbe Laserstrahl (A) in die Lichtpropagationseinheit (4) von einer einseitigen Richtung einer Achse (C) der Lichtpropagationseinheit (4) eingegeben wird und der zweite halbe Laserstrahl (B) in axialer Symmetrie zu dem ersten Laserstrahl (A) relativ zu der Achse (C) der Lichtpropagationseinheit (4) eingegeben wird,
der erste halbe Laserstrahl (A) von der Lichtpropagationseinheit (4) emittiert wird mit einer Winkelverteilung, die rotationssymmetrisch zu der Achse (C) der Lichtpropagationseinheit (4) ist, und der zweite halbe Laserstrahl (B) von der Lichtpropagationseinheit (4) mit einer Winkelverteilung, die rotationssymmetrisch zu der Achse (C) der Lichtpropagationseinheit (4) ist, emittiert wird, und
der erste halbe Laserstrahl (A) von der Lichtpropagationseinheit (4) in Überlagerung mit dem zweiten halben Laserstrahl (B) emittiert wird.

2. Die Laserlichtquellenvorrichtung (10; 11) nach Anspruch 1, wobei die Lichtpropagationseinheit (4) derart ausgebildet ist, dass sie einen rechtwinkligen oder einen D-förmigen Querschnitt aufweist.

3. Die Laserlichtquellenvorrichtung (10; 11) nach einem der vorhergehenden Ansprüche, wobei die Polarisationsdreheinheit (2) eine Polarisation eines Laserstrahls, der von etwa einer Hälfte der lichtemittierenden Punkte (P) ausgegeben wird, dreht.

4. Die Laserlichtquellenvorrichtung (10; 11) nach einem der Ansprüche 1 bis 3, wobei die Laserlichtquelle (1) ein Halbleiterlaser ist, in dem die lichtemittierenden Punkte (P) in einer Form eines Arrays auf einer Emissionsoberfläche des Laserstrahls angeordnet sind.

5. Die Laserlichtquellenvorrichtung (10; 11) nach einem der Ansprüche 1 bis 3, wobei die Laserlichtquelle (1) ein Festkörperlaser mit einer Vielzahl von lichtemittierenden Punkten (P) ist.

6. Die Laserlichtquellenvorrichtung (10; 11) nach einem der Ansprüche 1 bis 5, wobei die Polarisationsdreheinheit (2) ein λ/2-Plättchen ist.

7. Die Laserlichtquellenvorrichtung (10; 11) nach einem der Ansprüche 1 bis 6, wobei die Polarisationsdreheinheit (2) eine Quartz-Drehvorrichtung ist.

8. Die Laserlichtquellenvorrichtung (10; 11) nach einem der Ansprüche 1 bis 7, wobei die Polarisationsdreheinheit (2) eine Faraday-Drehvorrichtung ist.

9. Die Laserlichtquellenvorrichtung (10; 11) nach einem der Ansprüche 1 bis 8, wobei die Lichtpropagationseinheit (4) eine optische Faser ist.

10. Die Laserlichtquellenvorrichtung (10; 11) nach einem der Ansprüche 1 bis 8, wobei die Lichtpropagationseinheit (4) ein Integratorstab ist.

## Revendications

1. Dispositif de source de lumière laser (10 ; 11) comprenant :
une source de lumière laser (1) qui émet des faisceaux lasers polarisés de manière linéaire à partir d'une pluralité de points d'émission de la lumière (P), dans lequel la pluralité de points d'émission de la lumière se situent dans un plan (plan x y) qui est le côté émission des faisceaux lasers, et les faisceaux lasers sont perpendiculaires au côté émission des faisceaux lasers ; et
une unité de mise en rotation de la polarisation (2) qui est agencée sur l'axe de la lumière d'un faisceau laser délivré en sortie par une pluralité de points d'émission de la lumière (P) de la source de lumière laser (1) ;
une unité de captage de la lumière (3) qui se compose d'une ou d'une pluralité de lentilles de captage qui captent une première moitié de la totalité du faisceau laser (A) transmis par la source de lumière laser (1) par l'intermédiaire de l'unité de mise en rotation de la polarisation (2), et la seconde moitié de la totalité du faisceau laser (B) transmise par la source de lumière laser (1) sans passer par l'unité de mise en rotation de la polarisation (2) ; et
une unité de propagation de la lumière (4) qui est une fibre optique ou une tige d'intégrateur, dans laquelle pénètrent les faisceaux laser captés par l'unité de captage de la lumière (3), et qui provoque la propagation à travers celle-ci des faisceaux lasers, dans lequel :
l'unité de mise en rotation de la polarisation (2) fait tourner de 90° la polarisation du faisceau laser délivré en sortie par une pluralité de points d'émission de la lumière (P) ;
l'unité de propagation de la lumière (4) est agencée de telle sorte que la position de captage de la lumière de la première moitié du faisceau laser (A), et de la seconde moitié du faisceau laser (B), captées par l'unité de captage de la lumière (3), constitue une entrée de l'unité de propagation de la lumière (4), que la première moitié du faisceau laser (A) soit introduite dans l'unité de propagation de la lumière (4) à partir d'une direction d'un côté d'un axe (C) de l'unité de propagation de la lumière (4), et que la seconde moitié du faisceau laser (B) soit introduite en symétrie axiale avec le premier faisceau laser (A) par rapport à l'axe (C) de l'unité de propagation de la lumière (4) ;
la première moitié du faisceau laser (A) est émise à partir de l'unité de propagation de la lumière (4) en présentant une distribution angulaire qui est symétrique en rotation avec l'axe (C) de l'unité de propagation de la lumière (4), et la seconde moitié du faisceau laser (B) émise à partir de l'unité de propagation de la lumière (4) en présentant une distribution d'angle qui est symétrique en rotation avec l'axe (C) de l'unité de propagation de la lumière (4) ; et
la première moitié du faisceau laser (A) est émise, à partir de l'unité de propagation de la lumière (4), superposée à la seconde moitié du faisceau laser (B).

2. Dispositif de source de lumière laser (10, 11) selon la revendication 1, dans lequel l'unité de propagation de la lumière (4) est configurée de façon à présenter une section transversale rectangulaire ou en forme de D.

3. Dispositif de source de lumière laser (10 ; 11) selon l'une quelconque des revendications précédentes, dans lequel l'unité de mise en rotation de la polarisation (2) fait tourner la polarisation d'un faisceau laser délivré en sortie par une moitié environ des points d'émission de la lumière (P).

4. Dispositif de source de lumière laser (10 ; 11) selon l'une quelconque des revendications 1 à 3, dans lequel la source de lumière laser (1) est un laser à semi-conducteur dans lequel les points d'émission de la lumière (P) sont agencés en une forme de réseau sur une surface d'émission des faisceaux lasers.

5. Dispositif de source de lumière laser (10 ; 11) selon l'une quelconque des revendications 1 à 3, dans lequel la source de lumière laser (1) est un laser à solide qui présente une pluralité de points d'émission de la lumière (P).

6. Dispositif de source de lumière laser (10 ; 11) selon l'une quelconque des revendications 1 à 5, dans lequel l'unité de mise en rotation de la polarisation (2) est une lame demi-longueur d'onde.

7. Dispositif de source de lumière laser (10 ; 11) selon l'une quelconque des revendications 1 à 6, dans lequel l'unité de mise en rotation de la polarisation (2) est un rotateur à quartz.

8. Dispositif de source de lumière laser (10 ; 11) selon l'une quelconque des revendications 1 à 7, dans lequel l'unité de mise en rotation de la polarisation (2) est un rotateur de Faraday.

9. Dispositif de source de lumière laser (10 ; 11) selon l'une quelconque des revendications 1 à 8, dans lequel l'unité de propagation de la lumière (4) est une fibre optique.

10. Dispositif de source de lumière laser (10 ; 11) selon l'une quelconque des revendications 1 à 8, dans lequel l'unité de propagation de la lumière (4) est une tige d'intégrateur.
